# EUROPEAN PATENT APPLICATION

(11) **EP 4 683 067 A2**
(43) Date of publication of application: **21.01.2026**
(21) Application number: 25221381.4
(22) Date of filing: 03.03.2023
(51) Int. Cl.: H01M 50/209

(54) **BATTERY PACK**

(30) Priority: 04.03.2022 KR 20220028317; 23.12.2022 KR 20220182801
(62) Divisional of application: 23159975.4
(71) Applicant: SK On Co., Ltd., Seoul 03161 (KR)
(72) Inventor: LEE, Seung Hun, 34124 Daejeon (KR); YOO, Tak Kyung, 34124 Daejeon (KR); CHOI, Yang Kyu, 34124 Daejeon (KR)
(74) Representative: Prüfer & Partner mbB Patentanwälte · Rechtsanwälte

(57) **Abstract**

A battery pack includes a plurality of battery modules each including a plurality of battery cells; and a pack housing having a plurality of accommodation spaces in which the plurality of battery modules are accommodated and at least one flow passage,
wherein at least one of the plurality of battery modules includes an upper cover covering an upper portion of the plurality of battery cells; and
at least one discharge port configured to allow gas generated from the plurality of battery cells to be discharged; and
wherein the upper cover is configured to cover a gap between the at least one discharge port and the at least one flow passage of the pack housing.

## Description

### BACKGROUND

### 1. FIELD

The present disclosure relates to a battery pack.

### 2. DESCRIPTION OF RELATED ART

A secondary battery (battery cell) may be conveniently charged and discharged differently from primary batteries, and has attracted attention as a power source of various mobile devices and electric vehicles. A battery module may be modularized by connecting a plurality of battery cells, and a battery pack may be configured as a large-capacity energy storage device by connecting a plurality of battery modules and/or battery cells. As energy capacity required for a battery pack has gradually increased, a plurality of battery modules may be disposed in the battery pack.

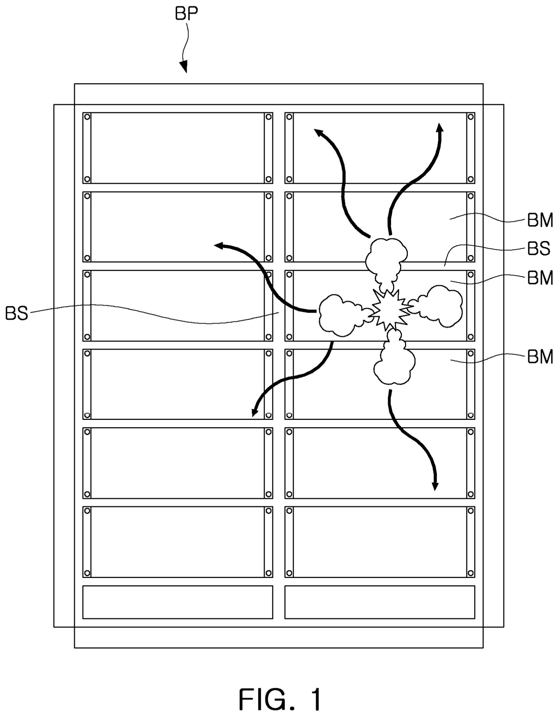

FIG. 1 is a diagram illustrating an internal region of a battery pack BP according to the prior art.

When the battery module BM receives a severe impact from the outside, or when severe charging and discharging are repeatedly performed, thermal runaway in which high-temperature gas or flames is generated in the battery module BM may occur.

As the thermal runaway phenomenon occurs, high-temperature gas or flames may be continuously emitted from the battery module BM into the battery pack BP. Such high-temperature gas or flames may flow over a partition structure BS disposed between the battery modules BM and may spread to other adjacent battery modules BM. Accordingly, other battery modules adjacent to the battery module BM in which thermal runaway has occurred may also be ignited in a chain, and such that there may be a risk in which thermal runaway of the battery pack BP may be accelerated.

To prevent such chain ignition, a battery pack having a structure for preventing gas or flames generated from one battery module from being transferred to another adjacent battery module and safely discharging gas or flames to the outside of the battery pack has been necessary.

### SUMMARY

An aspect of the present disclosure is to provide a battery pack which may block gas or flames from spreading to other adjacent battery modules in thermal runaway and may safely discharge high-temperature gas generated from the battery module.

According to an aspect of the present disclosure, a battery pack includes a plurality of battery modules each including a plurality of battery cells; and a pack housing having a plurality of accommodation spaces in which the plurality of battery modules are accommodated, wherein the pack housing includes a plurality of venting holes disposed on an external surface of the pack housing and configured to discharge gas generated from the plurality of battery modules, and wherein each of the plurality of accommodation spaces is configured to communicate with a different venting holes among the plurality of venting holes.

The pack housing may include a lower frame on which the plurality of battery modules are seated; a first side frame including a plurality of flow passages through which the gas can flow, each of the plurality of flow passages is configured to communicate with a different accommodation space among the plurality of accommodation spaces; a second side frame intersecting the first side frame; and a cross frame connected to the lower frame and disposed between the plurality of accommodation spaces.

The plurality of venting holes may include a first venting hole and a second venting hole spaced apart from each other, and the plurality of flow passages may include a first flow passage configured to communicate with the first venting hole; and a second flow passage configured to communicate with the second venting hole and partitioned from the first flow passage.

The first flow passage and the second flow passage may extend in a length direction of the first side frame.

At least one of the plurality of battery modules may include a discharge port configured to allow gas generated from the plurality of battery cells to be discharged, and the first side frame may include a first communication hole opposing the discharge port and configured to communicate with one of the plurality of flow passages.

The plurality of venting holes may further include a third venting hole spaced apart from the first venting hole and the second venting hole, and the second side frame may include a third flow passage configured to communicate with the first venting hole; and a fourth flow passage configured to communicate with the third venting hole and partitioned from the third flow passage.

The second side frame may include a second communication hole disposed adjacent to an end of the cross frame and configured to communicate with the third flow passage or the fourth flow passage.

At least one of the plurality of battery modules may include a cell stack in which the plurality of battery cells are stacked; and an upper cover covering an upper portion of the cell stack, and the upper cover is coupled to the pack housing.

At least one side of the upper cover may be coupled to the first side frame or the cross frame and be configured to block the gas from flowing between the upper cover and the pack housing.

The upper cover may include a body portion opposing the cell stack; and a plurality of flange portions connected to the body portion and coupled to the pack housing.

One of the plurality of flange portions may be coupled to the first side frame, and the other of the plurality of flange portions may be coupled to the cross frame.

The cross frame may include a coupling portion protruding in a direction toward the first side frame and coupled to the flange portion, and a fifth flow passage through which gas generated from the plurality of battery modules flows may be formed below the coupling portion.

A step may be formed between the body portion and the plurality of flange portions.

The battery pack may further include a sealing member coupled to the upper cover and covering between the upper cover and the cross frame.

At least one of the plurality of battery modules may include a busbar assembly including a busbar electrically connected to the cell stack; a side cover disposed between the busbar assembly and the first side frame; and a shielding member disposed between the side cover and the busbar assembly and configured to prevent gas from flowing in a direction from the side cover toward the cell stack.

The shielding member may include ceramic wool.

The lower frame may include a third communication hole configured to communicate with one of the plurality of accommodation spaces, and at least one of the plurality of venting holes may be disposed on a lower surface of the lower frame and configured to allow gas flowing into the third communication hole to be discharged.

The number of accommodation spaces and the number of venting holes may be the same.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a diagram illustrating an internal region of a battery pack BP according to the prior art;
FIG. 2 is an exploded perspective diagram illustrating a battery pack according to an example embodiment of the present disclosure;
FIG. 3 is an exploded perspective diagram illustrating a battery module accommodated in a battery pack according to an example embodiment of the present disclosure;
FIG. 4 is an exploded perspective diagram illustrating a busbar assembly and a cover assembly included in a battery module according to an example embodiment of the present disclosure;
FIG. 5 is a cross-sectional diagram taken along line I-I' in FIG. 2;
FIG. 6 is a perspective diagram illustrating an upper cover included in a battery module according to an example embodiment of the present disclosure;
FIG. 7 is a diagram illustrating an example in which an upper cover of a battery module is coupled to a pack housing according to an example embodiment of the present disclosure;
FIG. 8 is a diagram illustrating an example in which a sealing member is coupled to an upper cover of a battery module according to an example embodiment of the present disclosure;
FIG. 9 is a diagram illustrating a gas flow path formed in a battery pack according to an example embodiment of the present disclosure;
FIG. 10 is a diagram illustrating portion A in FIG. 9, viewed from another angle;
FIG. 11 is a diagram illustrating portion B in FIG. 9, viewed from another angle;
FIG. 12 is a diagram illustrating a gas flow path formed in a battery pack according to an example embodiment of the present disclosure;
FIG. 13 is a cross-sectional diagram illustrating the battery pack illustrated in FIG. 12; and
FIG. 14 is a diagram illustrating a gas flow path formed in a battery pack according to another example embodiment of the present disclosure.

### DETAILED DESCRIPTION

Hereinafter, embodiments of the present disclosure will be described as follows with reference to the attached drawings.

The present disclosure may, however, be exemplified in many different forms and should not be construed as being limited to the specific embodiments set forth herein. Rather, these embodiments are provided such that this disclosure will be thorough and complete, and will fully convey the scope of the disclosure to those skilled in the art. Accordingly, shapes and sizes of the elements in the drawings may be exaggerated for clarity of description. Also, elements having the same function within the scope of the same concept represented in the drawing of each example embodiment will be described using the same reference numeral.

In the drawings, same elements will be indicated by same reference numerals. Overlapping descriptions and detailed descriptions of known functions and elements which may unnecessarily make the gist of the present disclosure obscure will not be provided. In the accompanying drawings, a portion of elements may be exaggerated, omitted or briefly illustrated, and the sizes of the elements may not necessarily reflect the actual sizes of these elements.

An expression used in the singular encompasses the expression of the plural, unless it has a clearly different meaning in the context. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In example embodiments, terms such as an upper side, an upper portion, a lower side, a lower portion, a side surface, a front surface, a rear surface, or the like, are represented based on the directions in the drawings, and may be used differently if the direction of an element is changed.

The terms "first," "second," and the like may be used to distinguish one element from the other, and may not limit a sequence and/or an importance, or others, in relation to the elements. In a portion of cases, a first element may be referred to as a second element, and similarly, a second element may be referred to as a first element without departing from the scope of right in the example embodiments.

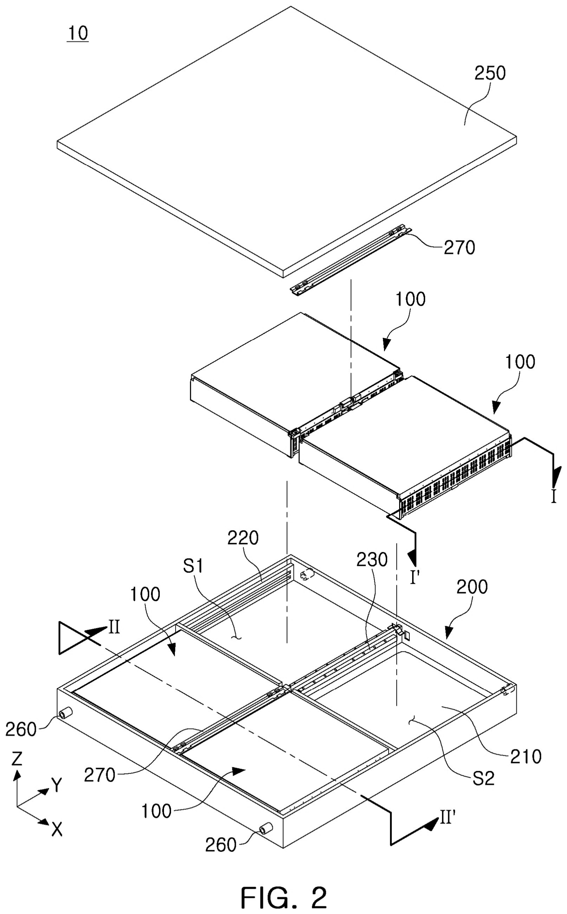

FIG. 2 is an exploded perspective diagram illustrating a battery pack according to an example embodiment.

The battery pack 10 may include at least one battery module 100 and a pack housing 200 having an internal space S in which the battery module 100 is accommodated.

The internal space S of the pack housing 200 may be partitioned into a plurality of accommodation spaces S1 and S2. One or more battery modules 100 may be accommodated in each of the accommodation spaces S1 and S2.

For example, FIG. 2 illustrates a battery pack 10 in which the battery modules 100 are accommodated in four accommodation spaces, respectively. However, the arrangement in FIG. 2 is merely an example, and the battery pack 10 may have three or less or five or more accommodation spaces. Also, two or more battery modules 100 may be accommodated in each of the accommodation spaces S1 and S2.

The pack housing 200 may include a lower frame 210 on which the battery module 100 is seated and a side frame 220 coupled to the lower frame 210 and providing rigidity in the height direction of the pack housing 200. The pack housing 200 may further include an upper frame 250 coupled to the side frame 220 and covering the internal space S of the pack housing 200.

The lower frame 210 may form the lower surface of the pack housing 200. For example, the lower frame 210 may be formed as a plate-like member having a seating surface on which the plurality of battery modules 100 are seated.

The side frame 220 may be coupled to the lower frame 210 and may form the side surface of the pack housing 200.

The side frame 220 may include a first side frame and a second side frame extending in different directions from the upper surface of the lower frame 210. For example, the first side frame may extend in a first direction (Y-axis direction), and the second side frame may extend in a second direction (X-axis direction) and may intersect the first side frame.

The pack housing 200 may include a cross frame disposed between the plurality of accommodation spaces S1 and S2. The cross frame may be connected to the lower frame and may partition the internal space S of the pack housing 200 into the plurality of accommodation spaces S1 and S2.

The side frame 220 and the cross frame may be configured to cover the side surface of the battery module 100 accommodated in the accommodation space S1 and S2.

The upper frame 250 may be disposed above the side frame 220 and may entirely cover the internal space S of the pack housing 200.

At least a portion of the pack housing 200 may be formed of a metal material having a predetermined degree of rigidity. For example, at least a portion of the lower frame 210 may include aluminum. When the lower frame 210 includes aluminum, thermal energy generated in the battery module 100 may be swiftly dissipated to the outside of the battery pack 10 due to excellent thermal conductivity of aluminum.

To increase the heat dissipation effect, the lower frame 210 may further include a heat dissipation member (not illustrated) or a cooling member (not illustrated). For example, a heat dissipation member (not illustrated) which may swiftly transfer thermal energy generated from the battery module 100 in a direction of the lower frame 210 may be disposed on the upper surface of the lower frame 210 on which the battery module 100 is seated.

As the battery cells 111 included in the battery module 100 are charged and discharged under harsh conditions, flames or high-temperature gas may be generated from the battery cells 111. To smoothly discharge such flame or gas to the outside of the battery module 100, the battery module 100 may include one or more discharge ports 131.

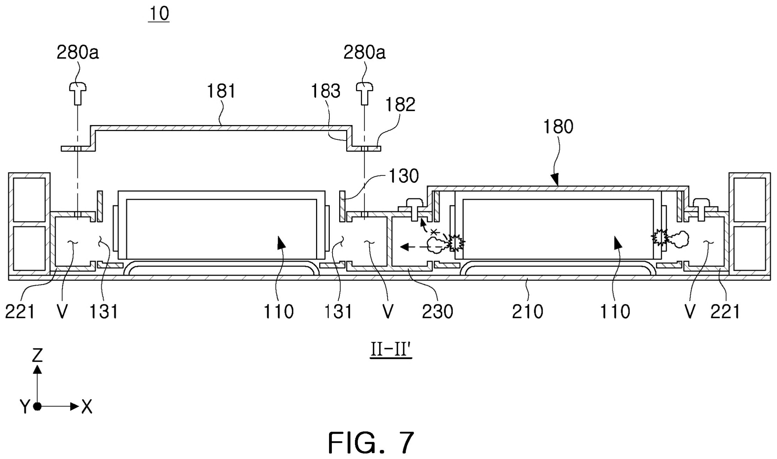

The gas or flames discharged from the battery module 100 to the internal space S of the pack housing 200 through the discharge port 131 may flow along flow passages formed in the pack housing 200 (e.g., V in FIGS. 7 to 8) and may be discharged to the outside of the battery pack 10 through a plurality of venting holes.

The plurality of venting holes may be configured to communicate with the venting path and to discharge gas or flames, and may be disposed on the external surface of the pack housing 200. For example, a plurality of venting holes may be formed in the external surface of the side frame 220 or the external surface of the lower frame 210.

In the battery pack 10 according to the example embodiments, the accommodation spaces S1 and S2 may communicate with different venting holes. For example, the first accommodation space S1 may communicate with one of a plurality of venting holes, and the second accommodation space S2 may communicate with another of the plurality of venting holes. Accordingly, gas generated from the first accommodation space S1 and the gas generated from the second accommodation space S2 may be discharged through different venting holes through different paths.

In the battery pack 10, the number of accommodation spaces and the number of venting holes may correspond to each other. For example, referring to FIG. 2, the battery pack 10 may have four accommodation spaces and four venting holes, and the accommodation spaces may communicate with different venting holes. Accordingly, gas or flames generated from one of the accommodation spaces may be discharged to the outside of the pack housing through the venting hole without flowing into another adjacent accommodation space.

The upper cover 180 of the battery module 100 may be coupled to the pack housing and may block gas or flames generated from one of the accommodation spaces from flowing over the cross frame 230 to another adjacent accommodation space, may guide gas or flames to flow into the venting path of the pack housing 200.

The battery pack 10 may further include a sealing member 270 covering a coupling portion between the upper cover 180 of the battery module 100 and the pack housing 200 and blocking gas or flames from escaping through a gap between the upper cover 180 and the pack housing. However, in the battery pack 10 according to the example embodiments, the sealing member 270 may not be provided if desired.

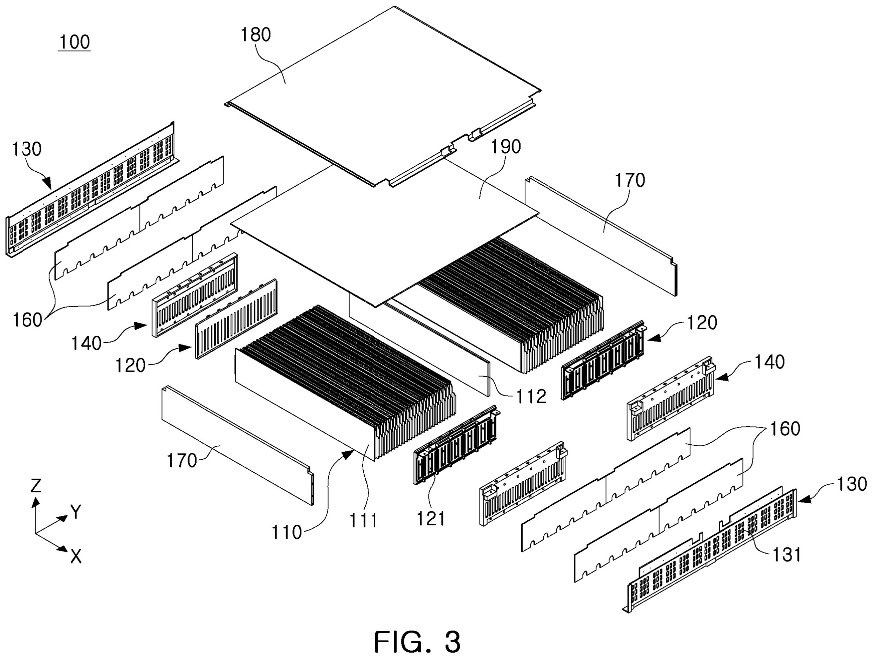

Hereinafter, the battery module 100 accommodated in the battery pack 10 will be described in greater detail with reference to FIGS. 3 to 5.

FIG. 3 is an exploded perspective diagram illustrating a battery module accommodated in a battery pack according to an example embodiment.

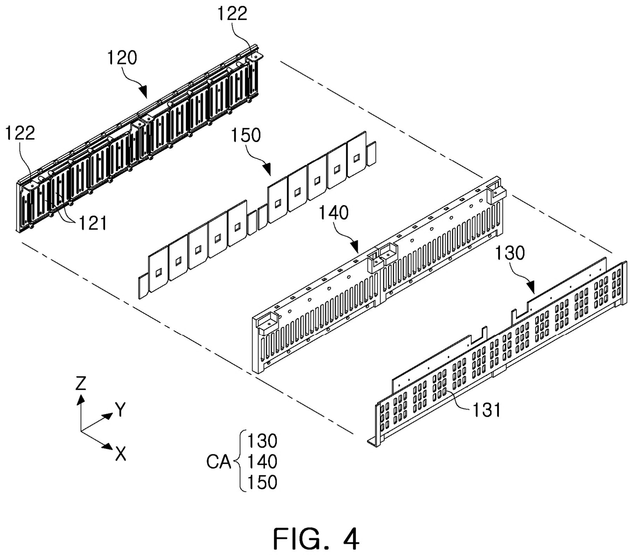

FIG. 4 is an exploded perspective diagram illustrating a busbar assembly and a cover assembly included in a battery module according to an example embodiment.

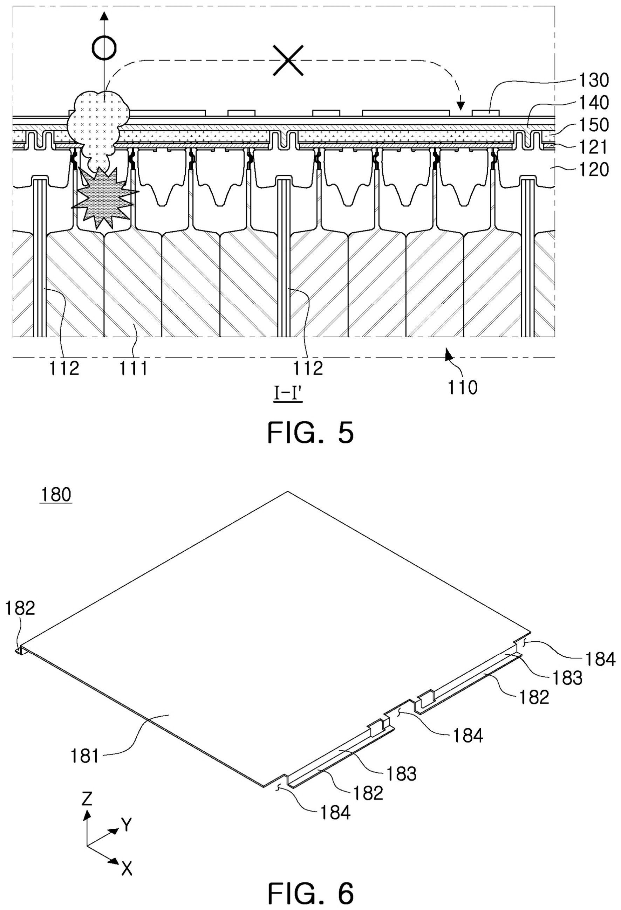

FIG. 5 is a cross-sectional diagram taken along line I-I' in FIG. 2.

Since the battery module and battery pack described with reference to FIGS. 3 to 5 may correspond to the battery module and the battery pack described with reference to FIG. 2, overlapping descriptions may not be provided.

FIGS. 3 to 5 illustrate example shapes of a battery module accommodated in a battery pack (10 in FIG. 2), and the specific shape of the battery module is not limited thereto. The battery module 100 included in the battery pack 10 according to the example embodiments may be an assembly of battery cells 111 and may function as an energy storage device.

The battery module 100 may be accommodated in the accommodation spaces S1 and S2 of the pack housing 200. In the battery pack 10, a plurality of accommodation spaces S1 and S2 may be provided, and one or more battery modules 100 may be accommodated in each of the accommodation spaces S1 and S2.

At least one of the plurality of battery modules 100 may include a cell stack 110 including a plurality of battery cells 111 stacked in a first direction (Y-axis direction), a busbar assembly 120 electrically connected to the cell stack 110, and a side cover 130 covering the busbar assembly 120.

The cell stack 110 may include a plurality of battery cells 111 electrically connected to each other.

The battery cell 111 included in the cell stack 110 may be a pouch-type secondary battery having a structure in which an electrode assembly (not illustrated) is accommodated in a pouch. In a pouch-type secondary battery, an electrode assembly (not illustrated) and an electrolyte (not illustrated) may be accommodated in a pouch formed by forming a sheet of exterior material or a plurality of exterior materials.

However, the battery cell 111 is not limited to a pouch-type secondary battery. For example, the battery cell 111 may be formed of a prismatic can-type secondary battery. Alternatively, the battery cell 111 may have a configuration in which a plurality of pouch-type secondary batteries are grouped in a bundle.

The plurality of battery cells 111 may be stacked in a first direction (Y-axis direction) and may form at least a portion of the cell stack 110.

The cell stack 110 may further include a protective member 112 for protecting the battery cells 111. For example, the protective member 112 may be a thermal insulating member disposed between the battery cells 111 and blocking heat from spreading between the battery cells 111. Alternatively, the protective member 112 may be a compressible member opposing the battery cell 111 and providing surface pressure to the battery cell 111. Alternatively, in the protective member 112, the thermal insulating member and the compressible member may be combined and the block of heat and providing of surface pressure may be simultaneously performed.

The battery module 100 may include a busbar assembly 120 electrically connected to the battery cells 111 of the cell stack 110.

The busbar assembly 120 may oppose at least one side of the cell stack 110. For example, referring to FIG. 3, the lower surface busbar assembly 120 may be disposed to oppose the cell stack 110 in a second direction (X-axis direction). Here, the second direction (X-axis direction) may be a direction perpendicular to the first direction (Y-axis direction) which may be the stacking direction of the battery cells 111.

The busbar assembly 120 may include the conductive busbar 121, may be disposed on at least one side of the cell stack 110 and may electrically connect the battery cells 111 to each other. A pair of busbar assemblies 120 may be provided and disposed on both sides of the cell stack 110, respectively. However, the pair of busbar assemblies 120 may be connected to each other and may be formed a single component.

A plurality of terminal portions 122 may be disposed in the busbar assembly 120. The terminal portion 122 is electrically connected to at least one of the conductive busbars 121 and may be exposed to the outside of the battery module 100. The battery cells 111 of the cell stack 110 may be electrically connected to the outside of the battery module 100 through the terminal portion 122.

In the battery module 100, the side cover 130 may be disposed on the outermost region of the side on which the busbar assembly 120 is disposed. The side cover 130 may include a rigid material (e.g., a metal such as aluminum or a resin compound) and may protect the cell stack 110 and the busbar assembly 120 from external impact.

To prevent the side cover 130 and the busbar assembly 120 from being electrically shorted, an insulating cover 140 including an insulating material may be disposed between the side cover 130 and the busbar assembly 120.

A plurality of discharge ports 131 through which gas or flames generated from the cell stack 110 may be discharged may be disposed on the side cover 130. At least a portion of the plurality of discharge ports 131 may be arranged side by side in the length direction of the side cover 130.

The discharge port 131 of the side cover 130 may oppose the first side frame or the cross frame 230 of the pack housing 200. For example, the discharge port 131 may oppose the first side frame or cross frame 230 in a second direction (X-axis direction). Here, the second direction (X-axis direction) may be a direction perpendicular to the first direction (Y-axis direction) which may be the stacking direction of the battery cells 111.

The discharge port 131 may communicate with the venting path formed in the pack housing 200. Gas or flames generated in the battery module 100 and discharged through the discharge port 131 may flow into the venting path of the pack housing 200.

A shielding member 150 blocking gas or flames from the outside of the battery module 100 from flowing into the cell stack 110 may be disposed between the side cover 130 and the busbar assembly 120. For example, the shielding member 150 may include a thermal insulating material and a thermal resistant material such as ceramic wool, and may block high-temperature gas or flames from flowing from the outside of the battery module 100 to the internal region.

The shielding member 150 may be disposed to cover the discharge port 131 of the side cover 130.

The shielding member 150 may be configured to allow gas or flames from the battery cell 111 to pass in a direction toward the outside of the battery module 100, and not to allow gas or flames to pass in the opposite direction. For example, referring to FIG. 5, internal pressure of the battery module 100 may be higher than external pressure of the battery module 100 due to gas or flames generated due to thermal runaway of the lower surface and battery cell 111, and due to the difference in pressure, gas or flames may pass through the shielding member 150 and may be discharged to the outside of the side cover 130. Also, gas or flames once discharged to the outside of the side cover 130 may be blocked by the shielding member 150 and may not reflow into the battery module 100.

The side cover 130, the insulating cover 140, and the shielding member 150 may be assembled to each other and may form a cover assembly CA.

Referring to FIG. 3, a safety cover 160 for preventing foreign substances from entering the battery module may be further disposed in the side cover 130. For example, the safety cover 160 may include a plastic material which may be melted in the thermal runaway of the battery cell 111, thereby preventing foreign substances from entering in a general situation, and not impeding the discharge of gas or flames during thermal runaway.

Also, as the safety cover 160 is disposed, a user or operator may be prevented from unintentionally contacting an internal component (e.g., a busbar) of the battery module 100 while handling the battery module 100.

The battery module 100 may further include an end cover 170 opposing at least one side of the cell stack 110. The end cover 170 may include a material (e.g., a metal such as aluminum or a resin compound) having rigidity and may protect the cell stack 110 from external impact.

The end cover 170 may be disposed to oppose the cell stack 110, and may apply surface pressure to the cell stack 110. For example, the end cover 160 may oppose the battery cell 111 in a first direction (Y-axis direction), which is the stacking direction of the battery cell 111, and accordingly, the end cover 160 may apply surface pressure to the battery cell 111.

The end cover 170 may oppose the cell stack 110 in a different direction from the side cover 130. For example, as illustrated in FIG. 3, the end cover 170 may be disposed to cover the cell stack 110 in the first direction (Y-axis direction), and the side cover 130 may cover the cell stack 110 in the second direction (X-axis direction). Accordingly, the pair of side covers 130 and the pair of end covers 170 may form four side surfaces of the battery module 100.

Both ends of the side cover 130 may be combined with the end cover 170. A fastening member (not illustrated) may be used to combine the end cover 170 and the side cover 130. For example, a plurality of fastening members (not illustrated) may penetrate through the end cover 170 and may be fastened to the side cover 130, and accordingly, the end cover 170 and the side cover 130 may be fixed to each other. However, the method of coupling the end cover 170 and the side cover 130 to each other is not limited to the above example. For example, the end cover 170 may be coupled to the side cover 130 by welding.

The battery module 100 may further include an upper cover 180 covering an upper portion of the cell stack 110. In the description below, "upper" or "upper direction" may refer to a positive Z-axis direction.

The upper cover 180 may be coupled to each of the end cover 170 and the side cover 130.

A heat blocking member 190 for blocking heat from spreading in a direction of the upper side of the cell stack 110 may be disposed between the upper cover 180 and the cell stack 110. For example, the heat blocking member 190 may include a material having heat resistance or heat insulation, such as mica, ceramic wool, or aerogel, and may block high-temperature thermal energy from spreading in the direction of upper side of the cell stack 110.

At least one side of the upper cover 180 may be coupled to the pack housing 200 and may cover individual accommodation spaces (e.g., S1 and S2 in FIG. 2) of the pack housing 200.

Hereinafter, the upper cover 180 of the battery module 100 will be described in greater detail with reference to FIGS. 6 to 8.

FIG. 6 is a perspective diagram illustrating an upper cover included in a battery module according to an example embodiment.

FIG. 7 is a diagram illustrating an example in which an upper cover of a battery module is coupled to a pack housing according to an example embodiment.

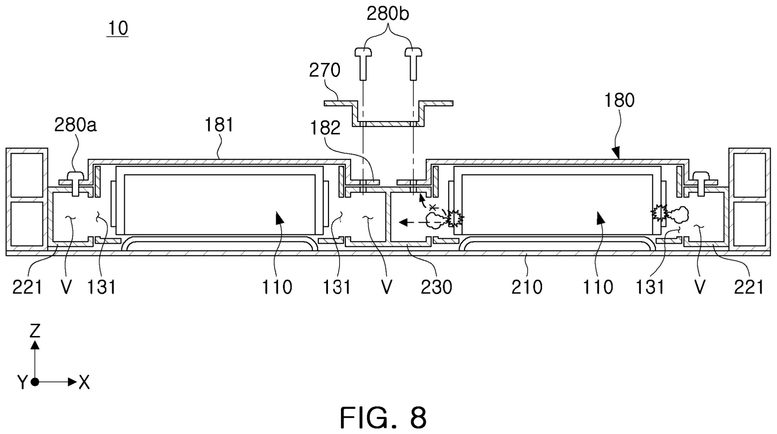

FIG. 8 is a diagram illustrating an example in which a sealing member is coupled to an upper cover of a battery module according to an example embodiment.

Since the battery module 100 and the battery pack 10 described with reference to FIGS. 6 to 8 correspond to the battery module and the battery pack described with reference to FIGS. 2 to 5, overlapping descriptions may not be provided.

The upper cover 180 may include a body portion 181 opposing the cell stack 110 and a plurality of flange portions 182 connected to the body portion 181 and coupled to the pack housing 200.

The body portion 181 of the upper cover 180 may oppose the cell stack 110 in a third direction (Z-axis direction). In this case, the third direction (Z-axis direction) may be the height direction of the battery pack 10 and may be perpendicular to both the first direction (Y-axis direction) and the second direction (X-axis direction).

The flange portion 182 may be disposed on the edge of the body portion 181. For example, the flange portion 182 may be configured to be connected to both ends of the body portion 181 in the second direction (X-axis direction).

A step may be formed between the flange portion 182 and the body portion 181. For example, the flange portion 182 may be disposed more adjacent to the lower frame 210 than the body portion 181, and a step 183 connecting the flange portion 182 to the body portion 181 may be formed. At least a portion of the step 183 may oppose the side cover 130 in the second direction (X-axis direction).

The plurality of flange portions 182 may be coupled to the first side frame or the cross frame 230. For example, one of the plurality of flange portions 182 may be coupled to the first side frame, and the other may be coupled to the cross frame 230.

The battery pack may further include a fastening member 280a fastening the flange portion 182 and the pack housing 200. For example, referring to FIG. 7, the fastening member 280a may pass through the flange portion 182 and may be fastened to the first side frame or the cross frame 230, and accordingly, the flange portion 182 and the first side frame or the cross frame 230 may be coupled to each other. However, the method of coupling the flange portion 182 and the pack housing 200 to each other is not limited to the example illustrated in the drawings. For example, the flange portion 182 and the pack housing 200 may be bonded to each other by laser welding.

Referring to FIGS. 7 and 8, in a state in which the flange portion 182 is coupled to the pack housing 200, the discharge port 131 of the battery module 100 may oppose the flow passage V of the first side frame or the cross frame 230 in the second direction (X-axis direction). Here, the upper cover 180 may cover the gap between the discharge port 131 and the flow passage V and may guide gas or flames discharged from the discharge port 131 to naturally flow into the flow passage V. Accordingly, gas or flames discharged from the discharge port 131 may flow out through the venting path formed along the flow passage V.

The upper cover 180 may cover one of the accommodation spaces (e.g., S1 and S2 in FIG. 2) and may form the accommodation spaces (S1 and S2 in FIG. 2) as compartments. That is, the accommodation spaces (S1 and S2 in FIG. 2) covered by the upper cover 180 may communicate with the flow passage V of the pack housing 200, and the escape of gas or flames through the region between the upper cover 180 and the pack housing 200 may be blocked. Accordingly, the upper cover 180 may block gas or flames discharged from the battery module 100 of one of the accommodation spaces from flowing over the cross frame 230 to an adjacent accommodation space.

That is, in a general battery module (BM in FIG. 1) and a battery pack (BP in FIG. 1), gas or flames generated from the battery module (BM in FIG. 1) may easily flow over the accommodated space to another adjacent battery module (BM in FIG. 1), but in the battery pack 10 according to the example embodiments, the upper cover 180 of the battery module 100 may cover the accommodation spaces S1 and S2 and may block the spreading of gas or flames.

As the gas or flames from one of the accommodation spaces S1 and S2 is blocked from flowing over the cross frame 230 by the upper cover 180, gas or flames may naturally flow into the venting path formed in the pack housing 200. Thereafter, gas or flames may flow along the venting path and may be safely discharged to the outside of the battery pack 10 through the venting hole (260 in FIG. 2) of the pack housing 200.

As described above, the battery module 100 and the battery pack 10 may form the space in which the battery module 100 is accommodated as a compartment using the upper cover 180 of the battery module 100 without a sealing member covering the upper portion of the battery module 100.

Also, as the upper cover 180 coupled to the structure of the battery module 100 (e.g., the end cover 170 and the side cover 130) is coupled to the cross frame 230, structural stability of the battery pack 10 may further increase.

Accordingly, the battery pack 10 according to the example embodiments may have a simplified and stable structure and may have a structure for isolating the accommodation spaces S1 and S2 in which the battery module 100 is accommodated from each other.

The lower portion of the battery module 100 may be configured such that the cell stack 110 may be exposed. For example, in the battery module 100, the side surfaces of the cell stack 110 may be covered by the side cover 130 and the end cover 170, and the upper surface of the cell stack 110 may be covered by the upper cover 180, and may not have a cover member covering the lower surface of the cell stack 110.

Accordingly, the battery cells 111 of the cell stack 110 may be exposed in a direction of the lower portion of the battery module 100. In the description below, "direction of the lower portion" may refer to a negative Z-axis direction. By including the structure, the battery cells 111 of the cell stack 110 may be directly exposed to components present outside the battery module 100. For example, the battery cell 111 may oppose the lower frame 210 of the pack housing 200 while the lower portion thereof is exposed. Alternatively, the battery cell 111 may oppose a heat dissipation member (not illustrated) disposed on the upper surface of the lower frame 210 while the lower portion thereof is exposed. Accordingly, heat may be smoothly discharged from the cell stack 110 in the direction of the lower portion, and accordingly, heat dissipation efficiency of the battery module 100 may be increased.

An opening 184, which is a hole or an avoidance structure through which a terminal portion of the battery module may be exposed, may be formed in the upper cover 180.

The sealing member 270 may be coupled to the upper cover 180 to cover the opening 184 such that gas or flames in the battery module 100 does not escape over the upper cover 180 through the opening 184 and the outflow of gas or flames may be blocked.

Referring to FIG. 8, at least a portion of the lower surface and sealing member 270 may be disposed to oppose the flange portion 182 of the upper cover 180 in a third direction (Z-axis direction).

The sealing member 270 may be coupled to the flange portion 182 of the upper cover 180. For example, as illustrated in FIG. 8, the fastening member 280b may penetrate through the sealing member 270 and the flange portion 182 in order and may be fastened to the cross frame 220.

The sealing member 270 may be formed to have a step corresponding to the shape of the step of the upper cover 180. Accordingly, the sealing member 270 may be closely coupled to the upper cover 180. However, the shape of the sealing member 270 illustrated in FIG. 8 is merely an example, and the specific shape of the sealing member 270 is not limited thereto.

As described above, the battery module 100 may include the upper cover 170 coupled to the pack housing 200 and the sealing member 270 coupled to the upper cover 170, such that gas or flames generated in one of the battery modules 100 may be prevented from spreading over the cross frame 230 to other adjacent battery modules 100.

Accordingly, gas or flames discharged from the battery module 100 may flow along the venting path provided in the pack housing 200 and may be safely discharged to the outside of the pack housing 200.

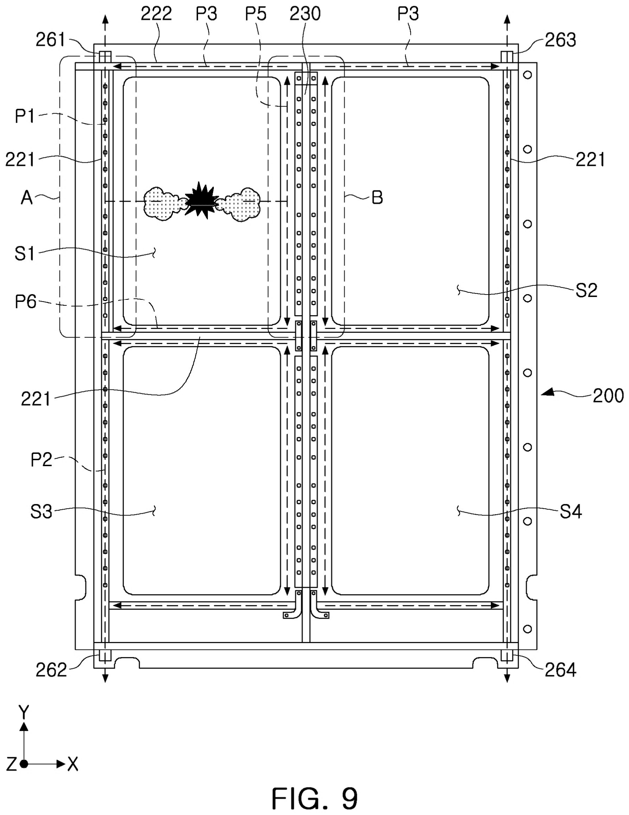

Hereinafter, the venting path formed in a battery pack will be described in greater detail with reference to FIGS. 9 to 11.

FIG. 9 is a diagram illustrating a gas flow path formed in a battery pack according to an example embodiment.

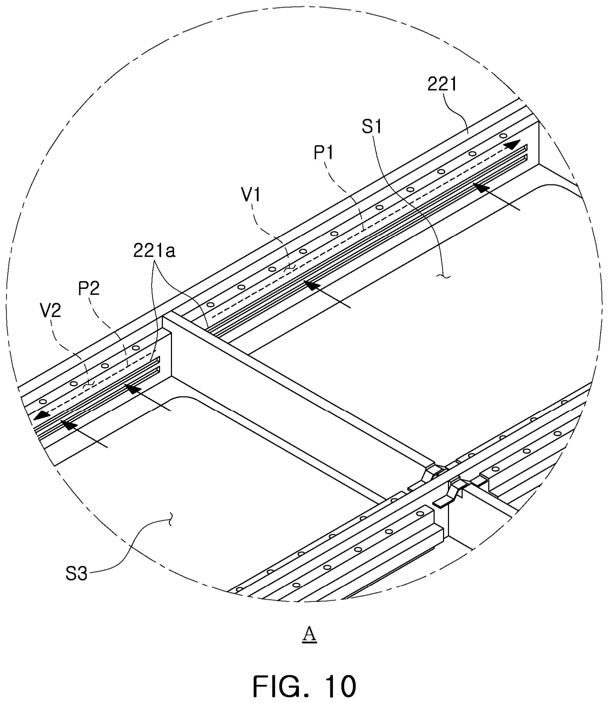

FIG. 10 is a diagram illustrating portion A in FIG. 9, viewed from another angle.

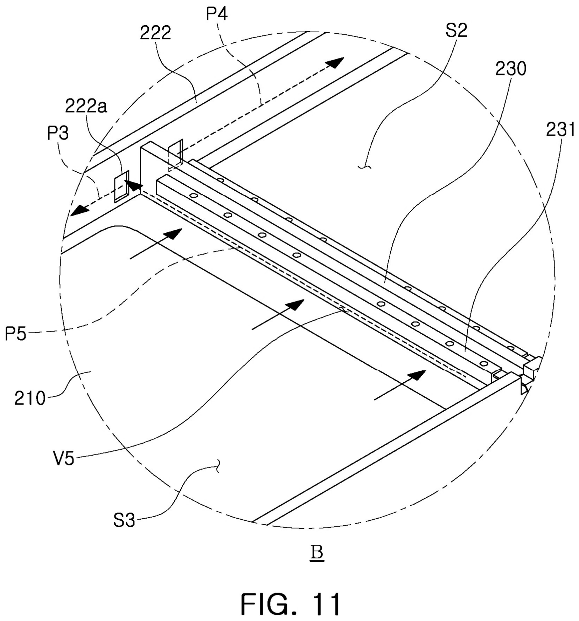

FIG. 11 is a diagram illustrating portion B in FIG. 9, viewed from another angle.

Since the battery module 100 and the battery pack 10 described with reference to FIGS. 9 to 10 correspond to the battery module 100 and the battery pack 10 described with reference to FIGS. 2 to 8, overlapping description may not be provided.

The pack housing 200 may have a plurality of accommodation spaces S1, S2, S3, and S4 in which different battery modules 100 may be accommodated, respectively. The plurality of accommodation spaces S1, S2, S3, and S4 may be partitioned by a plurality of side frames 220 and a cross frames 230.

The plurality of side frames 220 may include a first side frame 221 and a second side frame 222 extending in different directions and forming side surfaces of the pack housing 200.

The first side frame 221 may include a plurality of flow passages V1 and V2 communication with different accommodation spaces among the plurality of accommodation spaces S1, S2, S3, and S4 and allowing gas generated from the plurality of battery modules 100 to flow therethrough. For example, referring to FIGS. 9 and 10, the first side frame 221 may include a first flow passage V1 communicating with the first accommodation space S1 and a second flow passage V2 communicating with the third accommodation space S3.

The first flow passage V1 and the second flow passage V2 may extend from the internal region of the first side frame 221 in a first direction (Y-axis direction) which may be a length direction of the first side frame 221.

The first flow passage V1 and the second flow passage V2 may communicate with one of a plurality of accommodation spaces S1, S2, S3, and S4 through the first communication hole 221a of the first side frame 221. For example, the first communication hole 221a may be provided in the shape of an opening formed in at least one surface of the first side frame 221.

The first flow passage V1 and the second flow passage V2 may communicate with different venting holes 260. For example, the pack housing 200 may include a first venting hole 261 and a second venting hole 262 spaced apart from each other in the first direction (Y-axis direction), and the first flow passage V1 may communicate with the first venting hole 261, and the second flow passage V2 may communicate with the second venting hole 262.

The first flow passage V1 and the second flow passage V2 may be partitioned from each other. That is, gas flowing along the first flow passage V1 may be discharged to the outside of the pack housing 200 through the first venting hole 261 without flowing into the second flow passage V2.

The second side frame 222 may be disposed to intersect the first side frame 221. For example, the first side frame 221 may extend in a first direction and may form one side surface of the pack housing 200, and the second side frame 222 may extend in a second direction perpendicular to the first direction and may form another side surface of the pack housing 200.

The second side frame 222 may include a plurality of flow paths communicating with different accommodation spaces S1, S2, S3, and S4 among the plurality of accommodation spaces S1, S2, S3, and S4 and allowing gas generated from the plurality of battery modules 100 to flow therethrough. For example, referring to FIGS. 9 and 11, the second side frame 222 may include a third flow passage V3 communicating with the first accommodation space S1 and a fourth flow passage V4 communicating with the second accommodation space S2.

The third flow passage V3 and the fourth flow passage V4 may extend in the second direction, which is the length direction of the second side frame 222, in the second side frame 222.

The third flow passage V3 and the fourth flow passage V4 may communicate with different venting holes 260. For example, the pack housing 200 may include a first venting hole 261 and a third venting hole 263 spaced apart from each other in a second direction (X-axis direction), and the third flow passage V3 may communicate with the first venting hole 261, and the fourth flow passage V4 may communicate with the third venting hole 263. Here, the third flow passage V3 and the first flow passage V1, which communicate with the same accommodation space (e.g., the first accommodation space S1), may share the same venting hole (e.g., the first venting hole 261).

The third flow passage V3 and the fourth flow passage V4 may be partitioned from each other. That is, gas flowing along the third flow passage V3 may be discharged to the outside of the pack housing 200 through the first venting hole 261 without flowing into the fourth flow passage V4.

A cross frame 230 may be disposed between the plurality of accommodation spaces S1, S2, S3, and S4.

The cross frame 230 may include a coupling portion 231 coupled to the upper cover 180 of the battery module 100. For example, the coupling portion 231 may protrude from the cross frame 230 toward the first side frame 221 and may be configured to be coupled to the flange portion of the upper cover 180.

In the cross frame 230, a flow passage through which gas or flames emitted from the battery module 100 may flow may be formed below the protruding coupling portion 231. For example, referring to FIG. 11, a fifth flow passage V5 may be formed below the coupling portion 231 on the lower surface in the cross frame 230. The fifth flow passage V5 may extend in the first direction (Y-axis direction) which is the length direction of the cross frame 230.

Gas or flames emitted from the battery module 100 may flow along the fifth venting path P5 formed along the fifth flow passage V5 and may flow into the flow passage of the second side frame 222.

The second side frame 222 may include a second communication hole 222a disposed adjacent to an end of the cross frame 230 and communicating with the fifth venting path P5. The second communication hole 222a may connect a venting path (e.g., a third venting path) formed in the second side frame 222 to a venting path (e.g., a fifth venting path P5) formed in the cross frame 230. For example, the second communication hole 222a may be provided in the shape of an opening formed on at least one surface of the second side frame 222.

In the cross frame 230, a flow passage may be formed on both sides of the cross frame 230. For example, gas discharged from the battery module 100 accommodated in the first accommodation space S1 may flow along a venting path formed along one surface of the cross frame 230, and gas discharged from the battery module 100 accommodated in the second accommodation space S2 may flow along another venting path formed on the other surface of the cross frame 230.

The pack housing 200 may further include a connection frame 240 intersecting between the cross frame 230 and the first side frame 221.

Gas or flames generated from the battery module 100 may flow along at least one side surface of the connection frame 240. For example, referring to FIG. 9, a sixth venting path P6 may be formed along at least one side surface of the connection frame 240, and gas or flames flowing along the sixth venting path P6 may flow into the first venting path P1 through the first communication hole 221a of the first side frame 221.

The venting path (e.g., P1 and P3) communicating with one of the accommodation spaces (e.g., S1) may not overlap the venting path (e.g., P2 or P4) communicating with another accommodation space (e.g., S2 or S3). That is, as illustrated in FIG. 9, each of the accommodation spaces S1, S2, S3, and S4 in the battery pack 10 may have an independent venting path and may not share the venting path with another accommodation space.

In the battery pack 10, each of the accommodation spaces S1, S2, S3, and S4 may be configured to communicate with different venting holes 260. Accordingly, gas or flames generated from the battery module 100 in one of the accommodation spaces S1, S2, S3, and S4 may not spread to other adjacent accommodation spaces S1, S2, S3, and S4, and may be entirely discharged to the outside of the battery pack 10 through the venting hole 260.

Also, by including the structure in which the upper cover 180 of the battery module 100 is coupled to the pack housing 200, gas or flames may be induced to flow into the flow passage of the pack housing 200, such that high-temperature thermal energy may be prevented from spreading between the accommodation spaces S1, S2, S3, and S4.

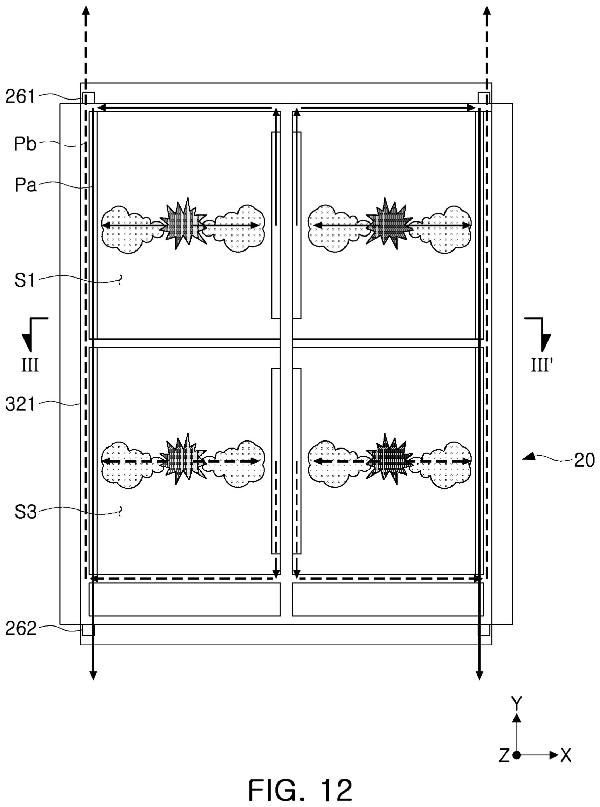

FIG. 12 is a diagram illustrating a gas flow path formed in a battery pack according to an example embodiment.

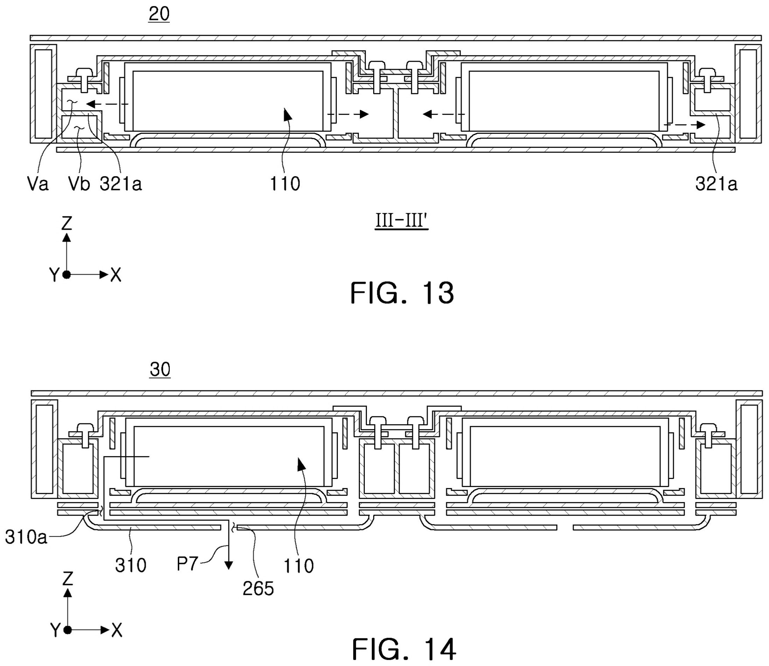

FIG. 13 is a cross-sectional diagram illustrating the battery pack illustrated in FIG. 12.

In the battery pack 20 in FIGS. 12 and 13, the configuration other than venting paths Pa and Pb formed in the first side frame 321 may be the same as that of the battery pack 10 in FIGS. 2 to 11, and thus, the descriptions overlapping those described with reference to FIGS. 2 to 11 may not be provided.

In example embodiments, a venting path (e.g., a first venting path Pa) communicating with one of the accommodation spaces (e.g., a first accommodation space S1) may not overlap the venting path (e.g., a second venting path Pb) communicating with another accommodation space (e.g., a third accommodation space (S3)) and may be configured to communicate with a venting hole (e.g., a second venting hole 262) adjacent to another accommodation space.

For example, referring to FIG. 12, the lower surface, the first venting path Pa formed in the first side frame 321 and communicating with the first accommodation space S1 may pass through the side surface of the third accommodation space S3 and may communicate with the second venting hole 262. The second venting path Pb communicating with the third accommodation space S3 may pass through the side surface of the first accommodation space S1 and may communicate with the first venting hole 261.

In the first side frame 321, the first venting path Pa and the second venting path Pb may be formed on different levels. For example, referring to FIG. 13, the lower surface, the first flow passage Va in which the first venting path Pa is formed and the second flow passage Vb in which the second venting path Pb is formed may oppose each other in the third direction (Z-axis direction). Here, the third direction (Z-axis direction) may be the height direction of the pack housing, and may be perpendicular to both the first direction (Y-axis direction) and the second direction (X-axis direction) described in the aforementioned example embodiment with reference to FIGS. 2 to 11.

A blocking wall 321a may be disposed between the first flow passage Va and the second flow passage Vb and may partition the two flow passages (Va and Vb). Accordingly, gas or flames flowing in the first flow passage Va may not flow into the second flow passage Vb.

By including the structure, the length of the venting path Pa and Pb may be further extended in the limited size of the battery pack 20. Since energy of gas discharged from the battery module 100 gradually decreases while flowing along the venting paths Pa and Pb for a long time, gas may be discharged to the outside of the battery pack 20 in a safe state.

FIG. 14 is a diagram illustrating a gas flow path formed in a battery pack 30 according to another example embodiment.

In the battery pack 30, the venting path P7 may be configured to pass through the lower frame 310. For example, referring to FIG. 14, the lower frame 310 may include a third communication hole 310a communicating with one of a plurality of accommodation spaces, and accordingly, gas or flames generated from the accommodation space may flow into the lower frame 310 through the third communication hole 310a.

A venting hole 265 communicating with the third communication hole 310a may be disposed on the lower surface of the lower frame 310. Gas flowing into the third communication hole 310a may be discharged to the outside of the battery pack through the venting hole 265.

In the battery pack 30 illustrated in FIG. 14, the configuration in which the plurality of accommodation spaces may communicate with different venting holes and may have venting paths independent of each other may be the same as the configuration of the battery packs 10 and 20 described in the aforementioned example embodiment with reference to FIGS. 2 to 13. For example, when the battery pack 30 has four accommodation spaces, four venting holes may be formed in the lower surface of the lower frame 310 and may communicate with different accommodation spaces.

According to the aforementioned example embodiments, gas or flames may be prevented from spreading to other adjacent battery modules during thermal runaway, by configuring the venting path independently for each space in which the battery module is accommodated, safe venting structure may be obtained. Accordingly, stability of the battery pack may be increased in thermal runaway.

While the example embodiments have been illustrated and described above, it will be apparent to those skilled in the art that modifications and variations could be made without departing from the scope of the present disclosure as defined by the appended claims.

The following items also belong to the disclosure of the present application:
1. A battery pack, comprising:
   a plurality of battery modules each including a plurality of battery cells; and
   a pack housing having a plurality of accommodation spaces in which the plurality of battery modules are accommodated,
   wherein the pack housing includes a plurality of venting holes disposed on an external surface of the pack housing and configured to discharge gas generated from the plurality of battery modules, and
   wherein each of the plurality of accommodation spaces is configured to communicate with a different venting hole among the plurality of venting holes.
2. The battery pack of item 1, wherein the pack housing includes:
   a lower frame on which the plurality of battery modules are seated;
   a first side frame including a plurality of flow passages through which the gas can flow, wherein each of the plurality of flow passages is configured to communicate with a different accommodation space among the plurality of accommodation spaces;
   a second side frame intersecting the first side frame; and
   a cross frame connected to the lower frame and disposed between the plurality of accommodation spaces.
3. The battery pack of item 2,
   wherein the plurality of venting holes include a first venting hole and a second venting hole spaced apart from each other, and
   wherein the plurality of flow passages include:
      a first flow passage configured to communicate with the first venting hole; and
      a second flow passage configured to communicate with the second venting hole and partitioned from the first flow passage.
4. The battery pack of item 3, wherein the first flow passage and the second flow passage extend in a length direction of the first side frame.
5. The battery pack of any one of items 2 to 4,
   wherein at least one of the plurality of battery modules includes an discharge port configured to allow gas generated from the plurality of battery cells to be discharged, and
   wherein the first side frame includes a first communication hole opposing the discharge port and configured to communicate with one of the plurality of flow passages.
6. The battery pack of any one of items 3 to 5,
   wherein the plurality of venting holes further includes a third venting hole spaced apart from the first venting hole and the second venting hole, and
   wherein the second side frame includes:
      a third flow passage configured to communicate with the first venting hole; and
      a fourth flow passage configured to communicate with the third venting hole and partitioned from the third flow passage.
7. The battery pack of item 6, wherein the second side frame includes a second communication hole disposed adjacent to an end of the cross frame and configured to communicate with the third flow passage or the fourth flow passage.
8. The battery pack of any one of items 2 to 7,
   wherein at least one of the plurality of battery modules includes:
   a cell stack in which the plurality of battery cells are stacked; and
   an upper cover covering an upper portion of the cell stack,
   preferably wherein the upper cover is coupled to the first side frame or the cross frame and is configured to block the gas from flowing between the upper cover and the pack housing.
9. The battery pack of item 8, wherein the upper cover includes:
   a body portion opposing the cell stack; and
   a plurality of flange portions connected to the body portion and coupled to the pack housing.
10. The battery pack of item 9,
   wherein one of the plurality of flange portions is coupled to the first side frame, and
   wherein the other of the plurality of flange portions is coupled to the cross frame.
11. The battery pack of item 9 or 10,
   wherein the cross frame includes a coupling portion protruding in a direction toward the first side frame and coupled to the flange portion, and
   wherein a fifth flow passage through which gas generated from the plurality of battery modules flows is formed below the coupling portion.
12. The battery pack of any one of items 9 to 11, wherein a step is formed between the body portion and the plurality of flange portions.
13. The battery pack of any one of items 8 to 12, further comprising:
   a sealing member coupled to the upper cover and covering between the upper cover and the cross frame.
14. The battery pack of any one of the preceding items, wherein at least one of the plurality of battery modules includes:
   a busbar assembly including a busbar electrically connected to the cell stack;
   a side cover disposed between the busbar assembly and the first side frame; and
   a shielding member disposed between the side cover and the busbar assembly and configured to prevent gas from flowing in a direction from the side cover toward the cell stack,
   preferably wherein the shielding member comprises ceramic wool.
15. The battery pack of any one of items 2 to 14,
   wherein the lower frame includes a third communication hole configured to communicate with one of the plurality of accommodation spaces, and
   wherein at least one of the plurality of venting holes is disposed on a lower surface of the lower frame and configured to allow gas flowing into the third communication hole to be discharged,
   preferably wherein the number of accommodation spaces and
   the number of venting holes is the same.

## Claims

1. A battery pack, comprising:
a plurality of battery modules each including a plurality of battery cells; and
a pack housing having a plurality of accommodation spaces in which the plurality of battery modules are accommodated and at least one flow passage,
wherein at least one of the plurality of battery modules includes an upper cover covering an upper portion of the plurality of battery cells; and
at least one discharge port configured to allow gas generated from the plurality of battery cells to be discharged; and
wherein the upper cover is configured to cover a gap between the at least one discharge port and the at least one flow passage of the pack housing.

2. The battery pack of claim 1, wherein the pack housing
further includes:
a lower frame on which the plurality of battery modules are seated;
a first side frame including a plurality of flow passages through which the gas can flow, wherein each of the plurality of flow passages is configured to communicate with a different accommodation space among the plurality of accommodation spaces;
a second side frame intersecting the first side frame; and
a cross frame connected to the lower frame and disposed between the plurality of accommodation spaces.

3. The battery pack of claim 2,
wherein the pack housing further includes a plurality of venting holes disposed on an external surface of the pack housing and configured to discharge gas generated from the plurality of battery modules, and
wherein each of the plurality of accommodation spaces is configured to communicate with a different venting hole among the plurality of venting holes,
wherein the plurality of venting holes include a first venting hole and a second venting hole spaced apart from each other, and
wherein the at least one flow passage includes a plurality of flow passages, and the plurality of flow passages include:
a first flow passage configured to communicate with the first venting hole; and
a second flow passage configured to communicate with the second venting hole and partitioned from the first flow passage.

4. The battery pack of claim 3, wherein the first flow passage and the second flow passage extend in a length direction of the first side frame.

5. The battery pack of claim 2,
wherein the first side frame includes a first communication hole opposing the at least one discharge port and configured to communicate with one of the plurality of flow passages.

6. The battery pack of claim 3,
wherein the plurality of venting holes further include a third venting hole spaced apart from the first venting hole and the second venting hole, and
wherein the second side frame includes:
a third flow passage configured to communicate with the first venting hole; and
a fourth flow passage configured to communicate with the third venting hole and partitioned from the third flow passage.

7. The battery pack of claim 6, wherein the second side frame includes a second communication hole disposed adjacent to an end of the cross frame and configured to communicate with the third flow passage or the fourth flow passage.

8. The battery pack of claim 2,
wherein the plurality of battery cells are stacked to form a cell stack;
wherein the upper cover is coupled to the first side frame or the cross frame and is configured to block the gas from flowing between the upper cover and the pack housing.

9. The battery pack of claim 8, wherein the upper cover includes:
a body portion opposing the cell stack; and
a plurality of flange portions connected to the body portion and coupled to the pack housing.

10. The battery pack of claim 9,
wherein one of the plurality of flange portions is coupled to the first side frame, and
wherein the other of the plurality of flange portions is coupled to the cross frame.

11. The battery pack of claim 9,
wherein the cross frame includes a coupling portion protruding in a direction toward the first side frame and coupled to the flange portion, and
wherein a fifth flow passage through which gas generated from the plurality of battery modules flows is formed below the coupling portion.

12. The battery pack of claim 9, wherein a step is formed between the body portion and the plurality of flange portions.

13. The battery pack of claim 8, further comprising:
a sealing member coupled to the upper cover and covering between the upper cover and the cross frame.

14. The battery pack of claim 8, wherein at least one of the plurality of battery modules includes:
a busbar assembly including a busbar electrically connected to the cell stack;
a side cover disposed between the busbar assembly and the first side frame; and
a shielding member disposed between the side cover and the busbar assembly and configured to prevent gas from flowing in a direction from the side cover toward the cell stack.

15. The battery pack of claim 2,
wherein the lower frame includes a third communication hole configured to communicate with one of the plurality of accommodation spaces, and
wherein at least one of the plurality of venting holes is disposed on a lower surface of the lower frame and configured to allow gas flowing into the third communication hole to be discharged.
